# EUROPEAN PATENT SPECIFICATION

(11) **EP 4 557 265 B1**
(45) Date of publication and mention of the grant of the patent: **17.06.2026**
(21) Application number: 23864317.5
(22) Date of filing: 06.04.2023
(51) Int. Cl.: G06F 1/16, G09F 9/30, G02F 1/33, G02F 1/1333, G04G 17/04, G04G 17/02

(54) **ELECTRONIC APPARATUS**
ELEKTRONISCHES GERÄT
APPAREIL ÉLECTRONIQUE

(30) Priority: 16.09.2022 CN 202222459234 U
(43) Date of publication of application: 21.05.2025
(73) Proprietor: Honor Device Co., Ltd., Shenzhen, Guangdong 518040 (CN)
(72) Inventor: FENG, Jiancheng, Shenzhen, Guangdong 518040 (CN); LIU, Yalong, Shenzhen, Guangdong 518040 (CN); WU, Yuanlong, Shenzhen, Guangdong 518040 (CN); LI, Gang, Shenzhen, Guangdong 518040 (CN); LI, Jianping, Shenzhen, Guangdong 518040 (CN)
(74) Representative: Goddar, Heinz J.
(86) International application number: PCT/CN2023/086650
(87) International publication number: WO 2024/055575

(56) References cited:
- EP-A1- 3 929 668
- EP-A1- 3 945 756
- WO-A1-2021/143325
- WO-A1-2022/111100
- CN-A- 106 055 027
- CN-A- 106 847 091
- CN-A- 109 461 382
- CN-A- 110 022 388
- CN-A- 113 470 522
- CN-A- 113 851 044
- CN-A- 114 842 737
- CN-A- 114 863 808
- CN-U- 209 283 276
- US-A1- 2011 221 688
- US-A1- 2016 291 745
- US-A1- 2019 041 900

## Description

### TECHNICAL FIELD

This application relates to the technical field of electronic devices, and in particular, to an electronic device.

### BACKGROUND

Smartwatches are favored by a large quantity of consumers because of their strong functions and their ability to interconnect and interwork with mobile phones. A particular width needs to be ensured for a bonding surface between a middle frame and a light-transmitting cover plate of the smartwatch, to ensure airtightness and connection strength of the smartwatch.

However, a bending region on a display screen of the smartwatch is located in a region of the bonding surface. Therefore, to avoid extruding the bending region of the display screen, the width of the bonding surface needs to be increased. Consequently, a width of a black side frame on the display surface of the smartwatch is increased and an area of the display region is reduced, affecting user experience.

US 2019/041900 A1 discloses a wearable device and an electronic apparatus, the wearable device including a waterproof member. The wearable device includes a window member having a bent structure. The waterproof member is disposed in the bent window member, thereby preventing a space into which water may leak and providing a wearable device in which a flexible connector passes through the waterproof member and is connected to a driving module below the flexible connector.
US 2016/291745 A1 discloses a display comprising a display panel, wherein the display panel comprises two or more bonding areas; a driver configured to drive the display panel; a layer that provides a medium via which signals can propagate to and from the driver, and wherein the driver is mounted to the layer; and two or more flexible connectors, wherein the two or more flexible connectors provide communication paths between the display panel and the driver, and wherein a first end of each of the two or more flexible connectors connects to the display panel at a corresponding one of the two or more bonding areas, and wherein a second end of each of the two or more flexible connectors connects to the driver via the layer.
US 2011/221688 A1 discloses a watch type mobile terminal may be provided that includes a main body having an edge to define a window hole having a central area, a circuit board within the main body, a display on the circuit board, a band coupled to the main body, and a support member having a first portion provided at an outer perimeter of the window hole and a second portion that extends from the first portion toward the central area of the window hole to cover the edge of the window hole. The watch type mobile terminal may also include a window having a first surface facing an exterior of the main body and a second surface formed on an opposite side of the window, and at least a portion of the first surface of the window is covered by the second portion of the support member. A ring member may be provided between the first portion of the support member and the window.

### SUMMARY

Embodiments of this application provide an electronic device, to resolve a problem that user experience is affected because a black side frame on a display surface of an existing electronic device is relatively wide and an area of a display region is relatively small.

To achieve the foregoing objective, the following technical solutions are used in the embodiments of this application:
An embodiment of this application provides an electronic device, including a light-transmitting cover plate, a display screen, a potting portion, and a support. The light-transmitting cover plate has a first region and a second region, and the first region is disposed around the second region. The display screen is disposed on a side of the light-transmitting cover plate, the display screen includes a display region and a bending region, the display region is attached to the second region, and a vertical projection of the bending region on the light-transmitting cover plate is located in the first region. The potting portion includes the bending region. The support and the potting portion form an annular structure, the annular structure is disposed around the display region, and both the support and the potting portion are fixedly connected to the first region.

In the electronic device provided in this embodiment of this application, the potting portion is used to wrap the bending region of the display screen, and the support is disposed in the remaining region. An annular structure is formed between the support and the potting portion. The annular structure is disposed around the display screen and is fixedly connected to the first region of the light-transmitting cover plate. In this way, a bonding surface that is on the light-transmitting cover plate and that is used to be connected to the middle frame is transferred to a surface that is of the annular structure formed by the potting portion and the support and that is away from the light-transmitting cover plate. That is, the middle frame is connected to the potting portion and the support, and the potting portion wraps the bending region of the display screen. Therefore, without increasing the width of the bonding surface between the middle frame, the potting portion, and the support, the bending region of the display screen can be prevented from being extruded while ensuring connection strength and airtightness of the electronic device, thereby helping reduce a black side frame on a display surface of the electronic device, increasing an area of the display region, and improving user experience.

In some embodiments of this application, the support is provided with a connection portion, and the connection portion is configured to increase a contact area between the support and the potting portion. In this way, connection strength between the support and the potting portion can be improved, thereby helping improve structural strength of the electronic device.

In some embodiments of this application, the connection portion is disposed on an end surface of the support facing the potting portion, and the end surface of the support covers a vertical projection of the connection portion on the end surface of the support. In this way, a bonding area between the support and the potting portion can be increased without increasing a size of a cross-sectional area of the support, to avoid increasing the width of the black side frame on the display surface of the electronic device.

In some embodiments of this application, the connection portion includes a protrusion, the protrusion is disposed on the end surface of the support facing the potting portion, the potting portion is bonded and fixed to at least one side wall of the protrusion, and the potting portion is bonded and fixed to a part that is on the end surface of the support and that is not provided with the protrusion. In this way, based on that opposite end surfaces of the support and the potting portion are bonded to each other, a bonding surface between a side wall of the protrusion and the potting portion is increased, so as to increase the bonding area between the support and the potting portion, thereby helping improve bonding strength between the support and the potting portion.

In some embodiments of this application, the support and the protrusion are of an integral structure. With this structure, it is beneficial to improving connection strength between the support and the protrusion, so as to further improve connection strength between the support and the potting portion.

In some embodiments of this application, the connection portion further includes a groove, the groove is provided on the end surface of the support facing the potting portion, the potting portion is filled in the groove, and the potting portion is bonded and fixed to a part that is on the end surface of the support and that is not provided with the groove. In this way, based on that opposite end surfaces of the support and the potting portion are bonded to each other, a bonding surface between an inner wall of the groove and the potting portion is increased, so as to increase the bonding area between the support and the potting portion, thereby helping improve bonding strength between the support and the potting portion.

In some embodiments of this application, the support includes a support body and a boss, the boss is disposed on a surface of the support body facing the display screen, a height of the boss in a direction perpendicular to the light-transmitting cover plate is less than a height of the support body in the direction perpendicular to the light-transmitting cover plate, and a surface of the boss away from the light-transmitting cover plate is flush with a surface of the support body away from the light-transmitting cover plate. In this way, an area of a surface away from the light-transmitting cover plate can be increased, that is, a bonding area between the support and the middle frame can be increased, thereby helping improve connection strength between the support and the middle frame.

In some embodiments of this application, the boss extends along a circumferential direction of the annular structure, and a length of the boss is equal to a length of the support body. With this structure, the length of the boss is the same as that of the support body, thereby facilitating further increasing the bonding area between the support and the middle frame.

In some embodiments of this application, a plurality of bosses are disposed, the plurality of bosses are distributed at intervals along a circumferential direction of the annular structure, and a length of the boss is less than a length of the support body. With this structure, materials of the bosses can be saved, so that production costs can be reduced while increasing the bonding area between the support and the middle frame.

In some embodiments of this application, a plurality of bending regions are disposed, a plurality of potting portions are disposed, and the plurality of bending regions are disposed in a one-to-one correspondence with the plurality of potting portions. The support includes a plurality of sub-supports, and the plurality of sub-supports and the plurality of potting portions are alternately disposed to form the annular structure. In this way, by disposing the plurality of potting portions, the corresponding bending regions can be respectively wrapped, and the annular structure formed by alternately disposing the plurality of potting portions and the plurality of sub-supports is connected to the middle frame, so that the black side frame on the display surface of the electronic device can be reduced, thereby increasing the area of the display region.

In some embodiments of this application, the potting portion uses two-component glue. This is beneficial to reducing curing time of the glue, thereby improving production efficiency.

In some embodiments of this application, the electronic device further includes a middle frame, the light-transmitting cover plate is clipped onto a side of the middle frame, and all the display screen, the potting portion, and the support are disposed in the middle frame; and a step surface disposed toward the light-transmitting cover plate is formed on an inner wall of the middle frame, and the potting portion and the support are fixed on the step surface. In this way, connection surfaces between the middle frame and both of the support and the potting portion are disposed along a direction parallel to the light-transmitting cover plate, which helps form limits for a display module, the support, and the potting portion along the direction perpendicular to the light-transmitting cover plate, to avoid movement along the direction.

### BRIEF DESCRIPTION OF DRAWINGS

FIG. 1 is a diagram of a structure of an electronic device according to an embodiment of this application;
FIG. 2 is an exploded view of an electronic device according to an embodiment of this application;
FIG. 3 is a diagram of a structure of a display screen according to an embodiment of this application;
FIG. 4 is a diagram of a structure of a display module according to an embodiment of this application;
FIG. 5 is a cross-sectional view of the display module shown in FIG. 4 along A-A;
FIG. 6 is a partially enlarged view of a connection structure between a display module and a middle frame according to an embodiment of this application;
FIG. 7 is a diagram of a structure of a black side frame of a flat screen according to an embodiment of this application;
FIG. 8 is a diagram of a structure of a black side frame of a curved screen according to an embodiment of this application;
FIG. 9 is a diagram of a structure of a rectangular screen according to an embodiment of this application;
FIG. 10 is a diagram of a structure of a display module according to the related technology;
FIG. 11 is a partial structural cross-sectional view of the display module according to FIG. 10;
FIG. 12 is an exploded view of a display module, a potting portion, and a support according to an embodiment of this application;
FIG. 13 is a diagram of a structure of a display module, a potting portion, and a support according to an embodiment of this application;
FIG. 14 is a partial structural cross-sectional view along B-B in FIG. 13;
FIG. 15 is a diagram of a structure of another support and a potting portion according to an embodiment of this application;
FIG. 16 is a structural enlarged view of a region B of FIG. 15;
FIG. 17 is a diagram of a structure of a connection portion according to an embodiment of this application;
FIG. 18 is a diagram of a connection structure between the connection portion according to FIG. 17 and a potting portion;
FIG. 19 is a diagram of a structure of another connection portion according to an embodiment of this application;
FIG. 20 is a diagram of a connection structure between the connection portion according to FIG. 19 and a potting portion;
FIG. 21 is a cross-sectional view of still another connection portion according to an embodiment of this application;
FIG. 22 is a cross-sectional view of a connection structure between the connection portion according to FIG. 21 and a potting portion;
FIG. 23 is a cross-sectional view of yet still another connection portion according to an embodiment of this application;
FIG. 24 is a cross-sectional view of a connection structure between the connection portion according to FIG. 23 and a potting portion;
FIG. 25 is a cross-sectional view of an electronic device according to an embodiment of this application;
FIG. 26 is a structural enlarged view of a region D of FIG. 25;
FIG. 27 is a structural enlarged view of a region E of FIG. 25;
FIG. 28 is a diagram of a partial structure of another support according to an embodiment of this application;
FIG. 29 is a diagram of a partial structure of a display module placed in a fixture lower cover according to an embodiment of this application;
FIG. 30 is a diagram of a partial structure of performing glue dispensing on a light-transmitting cover plate of the display module according to FIG. 29;
FIG. 31 is a front view of a glue dispensing region shown in FIG. 30;
FIG. 32 is a diagram of a partial structure of placing a support in a fixture lower cover and covering with a fixture upper cover according to FIG. 30; and
FIG. 33 is a diagram of a partial structure of a dam region in the fixture lower cover according to FIG. 32.

Reference numerals: 10-Electronic device; 100-Watchband; 110-First part; 120-Second part; 200-Housing; 210-Middle frame; 211-Step surface; 220-Rear cover; 230-Fastener; 300-Display module; 310-Light-transmitting cover plate; 311-First region; 312-Second region; 320-Display screen; 321-Display region; 322-Non-display region; 323-Bending region; 400-Glue frame; 500-Potting portion; 600-Support; 610-Sub-support; 620-Connection portion; 621-Protrusion; 621a-First surface; 621b-Second surface; 622-Groove; 622a-Opening; 630-Support body; 640-Boss; 700-Fixture upper cover; 710-Fixture lower cover; 720-Glue dispensing layer; 730-Dam region; and 740-Silicone liner.

### DESCRIPTION OF EMBODIMENTS

Technical solutions in embodiments of this application are described below with reference to accompanying drawings in embodiments of this application. Apparently, the described embodiments are merely some rather than all embodiments of this application.

The terms "first" and "second" below are merely intended for a purpose of description, and shall not be understood as an indication or implication of relative importance or implicit indication of the quantity of indicated technical features. Therefore, a feature limited by "first" or "second" can explicitly or implicitly includes one or more features.

In addition, in this application, orientation terms such as "upper" and "lower" are defined relative to orientations for schematic placement of components in the accompanying drawings. It should be understood that these directional terms are relative concepts, which are used for description and clarification relative to each other, and may change accordingly depending on changes in the orientations where the components are placed in the accompanying drawings.

In this application, unless otherwise explicitly specified and defined, the term "connection" should be understood in a broad sense. For example, the "connection" may be a fixed connection, a detachable connection, or an integral connection. The connection may be a direct connection, or an indirect connection through an intermediary.

Embodiments of this application provide an electronic device. The electronic device is an electronic device with a display function. Specifically, the electronic device may be a portable electronic apparatus or another type of electronic device. For example, the electronic device may be a wearable device (including a smartwatch, a smart band, or the like), a mobile phone, a tablet personal computer (tablet personal computer), a laptop computer (laptop computer), a personal digital assistant (personal digital assistant, PDA), a personal computer, a notebook computer, a vehicle-mounted device, augmented reality (augmented reality, AR) glasses, an AR helmet, virtual reality (virtual reality, VR) glasses, or a VR helmet. For ease of description, an example in which the electronic device is a smartwatch is used in the following for detailed description.

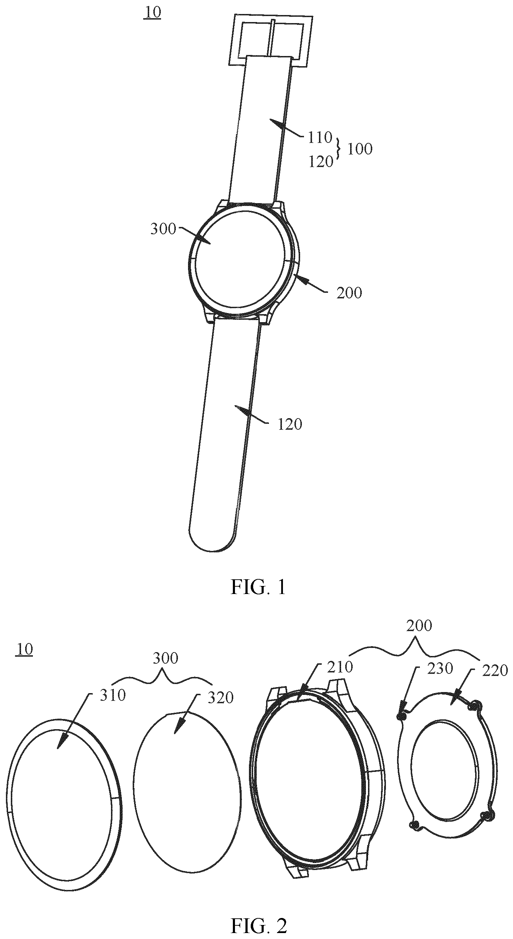

It may be learned from the foregoing that referring to FIG. 1 and FIG. 2, FIG. 1 is a diagram of a structure of an electronic device 10 according to an embodiment of this application, and FIG. 2 is an exploded view of an electronic device 10 (a watchband 100 is not shown in the figure) according to an embodiment of this application. In this embodiment, the electronic device 10 is a smartwatch (that is, the foregoing wearable device). The electronic device 10 may include the watchband 100, a display module 300, and a housing 200.

The watchband 100 is configured to wear the electronic device 10 at a wrist. The watchband 100 includes a first part 110 and a second part 120, and the first part 110 and the second part 120 are respectively disposed on two sides of the housing 200. In some embodiments, the watchband 100 and the housing 200 may be connected by using a connecting shaft. That is, the connecting shaft passes through a connection hole on the watchband 100, and two ends of the connecting shaft are connected to the housing 200. For example, the two ends of the connecting shaft may be fixedly connected or clipped to the housing 200. Alternatively, the watchband 100 may be fixedly connected to the housing 200. For example, the watchband 100 and the housing 200 are integrally injection molded, that is, the watchband 100 and the housing 200 form an integral structure. In addition, the watchband 100 may be made of a leather material, a plastic material, a metal material, or the like. Therefore, this is not specially limited in embodiments of this application.

The housing 200 is configured to protect electronic components inside the electronic device 10. The housing 200 includes a middle frame 210 and a rear cover 220. The first part 110 and the second part 120 of the watchband 100 are respectively disposed on two sides of the middle frame 210. Materials of the middle frame 210 and the rear cover 220 include, but are not limited to, metal, ceramics, plastic, and glass. In addition, the material of the middle frame 210 and the material of the rear cover 220 may be the same or may be different. Therefore, this is not specially limited in this application.

The rear cover 220 is disposed on a side of the middle frame 210, and the rear cover 220 is fixedly connected to the middle frame 210. For example, the rear cover 220 may be connected to the middle frame 210 in a manner such as bonding, clipping, welding, or screwing. For example, a connection hole is provided on the rear cover 220, and a threaded hole is provided on the middle frame 210. The housing 200 further includes a fastener 230 (for example, a screw). The fastener 230 passes through the connection hole in the rear cover 220 and is in a threaded connection to the threaded hole on the middle frame 210, so that the rear cover 220 is fixedly connected to the middle frame 210. In addition, a plurality of fasteners 230 may be disposed, and the fasteners 230 are evenly distributed along a circumferential direction of the middle frame 210, so that force-bearing balance is achieved, thereby facilitating improving connection strength between the rear cover 220 and the middle frame 210. Alternatively, the middle frame 210 and the rear cover 220 may be of an integral structure, that is, the middle frame 210 and the rear cover 220 constitute a single structural component.

The display module 300 is configured to display an image and the like. The display module 300 may include a light-transmitting cover plate 310 and a display screen 320 (or referred to as a display panel). Specifically, the light-transmitting cover plate 310 and the display screen 320 are stacked and can be bonded and fixed by using an optical cement. The light-transmitting cover plate 310 may be an ordinary light-transmitting cover plate 310 configured to protect the display screen 320 to avoid damage to the display screen 320 due to collision with an external force, and can play a dustproof role; or may be a light-transmitting cover plate 310 with a touch function, to enable the electronic device 10 to have the touch function, thereby making it more convenient for a user to use. Therefore, a specific material of the light-transmitting cover plate 310 is not specially limited in this application.

In addition, the light-transmitting cover plate 310 is disposed on a side of the middle frame 210 away from the rear cover 220, and the middle frame 210 is fixedly connected to the light-transmitting cover plate 310. In this way, the light-transmitting cover plate 310, the middle frame 210, and the rear cover 220 enclose an accommodating space, and the display screen 320 and other electronic components are disposed in the accommodating space.

For example, the light-transmitting cover plate 310 may partially extend into the middle frame 210, and is bonded and fixed to an inner wall of the middle frame 210. Alternatively, the light-transmitting cover plate 310 may be clipped onto an end surface of the middle frame 210, that is, the user cannot directly see a gap between the light-transmitting cover plate 310 and the middle frame 210 from a front surface (that is, a surface whose display picture faces the user) of the electronic device 10, so that the user can obtain a better visual effect, which helps improve user experience.

In addition, a flexible display screen 320 or a rigid display screen 320 may be used as the display screen 320. For example, the display screen 320 may be an organic light-emitting diode (organic light-emitting diode, OLED) display screen 320, an active-matrix organic light-emitting diode or an active-matrix organic light-emitting diode (active-matrix organic light-emitting diode, AMOLED) display screen 320, a mini organic light-emitting diode (mini organic light-emitting diode) display screen 320, a micro light-emitting diode (micro organic light-emitting diode) display screen 320, a micro organic light-emitting diode (micro organic light-emitting diode) display screen 320, a quantum dot light emitting diode (quantum dot light emitting diodes, QLED) display screen 320, or a liquid crystal display 320 (liquid crystal display, LCD).

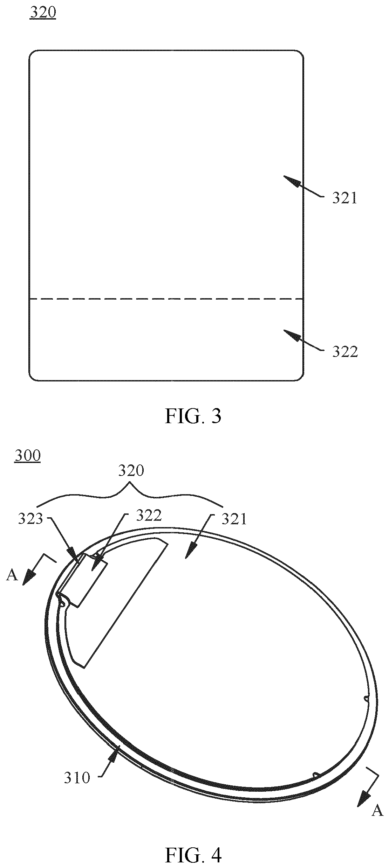

A drive circuit needs to be disposed on the display screen 320, to drive the display screen 320 to display an image. Referring to FIG. 3, FIG. 3 is a diagram of a structure of a display screen 320 according to an embodiment of this application. The display screen 320 shown in FIG. 3 is a rectangular display screen. The display screen 320 may be divided into a display region 321 and a non-display region 322. The drive circuit is disposed in the non-display region 322 of the display screen 320, and the non-display region 322 causes a black side frame on a display surface of the electronic device 10 to be enlarged, thereby reducing a screen-to-body ratio and affecting user experience.

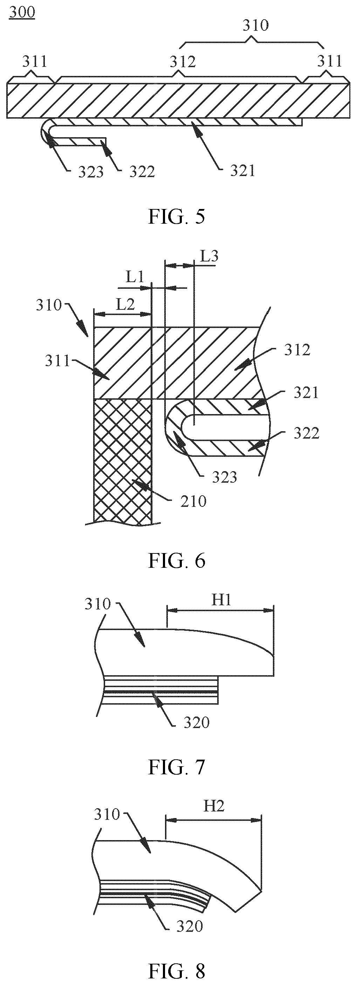

To reduce the black side frame, the screen-to-body ratio is increased. In some embodiments, referring to FIG. 4 and FIG. 5, FIG. 4 is a diagram of a structure of a display module 300 according to an embodiment of this application, and FIG. 5 is a cross-sectional view of the display module 300 shown in FIG. 4 along A-A. The display screen 320 may use a flexible OLED screen, and the non-display region 322 of the display screen 320 may be bent by using a COP (Chip On Pi) screen packaging process, so that the non-display region 322 of the display screen 320 is located on a side of the display region 321 away from the light-transmitting cover plate 310. Therefore, the black side frame on the display surface of the electronic device 10 can be reduced, and the screen-to-body ratio can be increased.

Specifically, a part used for connecting the display region 321 and the non-display region 322 of the display screen 320 is a bending region 323. The bending region 323 is in a bent state, so that the non-display region 322 can be located on the side of the display region 321 away from the light-transmitting cover plate 310, and the bending region 323 cannot display an image. The light-transmitting cover plate 310 has a first region 311 and a second region 312, the first region 311 is disposed around the second region 312, the display region 321 of the display screen 320 is attached to the second region 312, a vertical projection of the bending region 323 of the display screen 320 on the light-transmitting cover plate 310 is located in the first region 311, and the middle frame 210 is bonded and fixed to the first region 311. It should be noted that, the bending region 323 and the light-transmitting cover plate 310 may be partially attached to each other, or may be completely not in contact with each other. This is not specifically limited in this application.

However, referring to FIG. 6, FIG. 6 is a partially enlarged view of a connection structure between a display module 300 and a middle frame 210 according to an embodiment of this application. Because the bending region 323 of the display screen 320 cannot be extruded, to avoid failure of the display screen 320 due to extrusion, when the middle frame 210 is bonded to the first region 311 of the light-transmitting cover plate 310, a gap L1 needs to be left with the bending region 323 of the display screen 320, to avoid extruding the bending region 323. In addition, to ensure airtightness of the electronic device 10 and connection strength between components, a width L2 of a bonding surface between the middle frame 210 and the light-transmitting cover plate 310 needs to satisfy a particular width requirement. In this case, the width of the first region 311 on the light-transmitting cover plate 310 includes at least a sum of a width L3 of the bending region 323, the gap L1 between the bending region 323 and the middle frame 210, and the width L2 of the bonding surface between the middle frame 210 and the light-transmitting cover plate 310. In the related technology, the width is usually 3.5 mm to 4 mm. In this way, on a premise that an appearance size of the electronic device 10 is not changed, the black side frame on the display surface of the electronic device 10 is enlarged, causing a decrease in an area of a region for displaying an image (that is, the display region 321 of the display screen 320), affecting user experience.

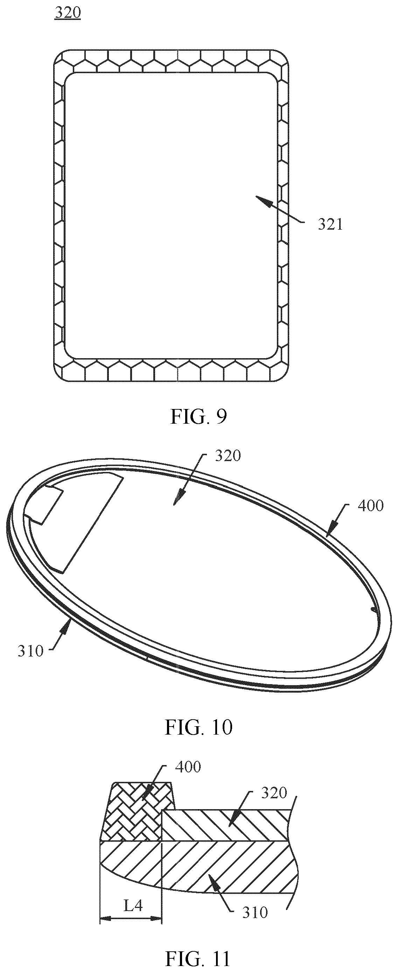

In the related technology, to resolve the foregoing problem, a design solution of a curved screen may be used. Referring to FIG. 7 and FIG. 8, FIG. 7 is a diagram of a structure of a black side frame of a flat screen according to the related technology, and FIG. 8 is a diagram of a structure of a black side frame of a curved screen according to the related technology. It can be learned from a width H1 of the black side frame shown in FIG. 7 and a width H2 of the black side frame shown in FIG. 8 that the width of the first region 311 of the light-transmitting cover plate 310 can be reduced along a direction parallel to the display screen 320 by bending an edge of the light-transmitting cover plate 310 toward a side of the display screen 320, thereby reducing the width of the black side frame. In addition, in a curved screen, larger curvature (that is, a larger curving radian of an edge) indicates a smaller width of the black side frame. However, for a circular screen, for example, a watch face, design costs of large curvature are high, a structure is complex, and packaging difficulty is high, leading to a low yield. For a rectangular screen, for example, a mobile phone screen, referring to FIG. 9, FIG. 9 is a diagram of a structure of a rectangular screen according to the related technology. The rectangular screen may be greatly bent at an edge thereof, but cannot be excessively bent at four vertex angles. Therefore, generally, sides in a length direction are greatly bent and sides in a width direction are less bent, to form a structure in which black side frames on two sides in the length direction are relatively narrow and side frames on two sides in the width direction are relatively wide, which is not beneficial to overall aesthetics.

Alternatively, referring to FIG. 10 and FIG. 11, FIG. 10 is a diagram of a structure of a display module 300 according to the related technology, and FIG. 11 is a partial structural cross-sectional view of the display module 300 according to FIG. 10. In the related technology, alternatively, a potting material may be used to wrap a periphery of the display screen 320, and the potting material is cured to form a glue frame 400. The glue frame 400 can wrap the bending region 323, and the glue frame 400 is bonded and fixed to the first region 311 of the light-transmitting cover plate 310. However, the middle frame 210 only needs to be bonded and fixed to the glue frame 400. That is, that the middle frame 210 is bonded and fixed to the light-transmitting cover plate 310 is converted into that the middle frame 210 is bonded and fixed to a surface of the glue frame 400 away from the light-transmitting cover plate 310. In this way, because the edge of the display screen 320 and the bending region 323 are wrapped by the glue frame 400, bonding strength between the glue frame 400 and the light-transmitting cover plate 310 can be satisfied. In addition, the middle frame 210 and the bending region 323 do not contact each other. Therefore, the width of the first region 311 is only a width L4 of the bonding surface between the glue frame 400 and the light-transmitting cover plate 310, thereby helping reduce the width of the black side frame on the display surface of the electronic device 10. However, the glue frame 400 is formed after a glue material is potted and the glue is cured. Because the glue contracts in a curing process, the glue frame 400 wraps a part of the display screen 320, causing relatively large stress on the display screen 320. The stress easily reduces planarity of the display screen 320, affecting normal use.

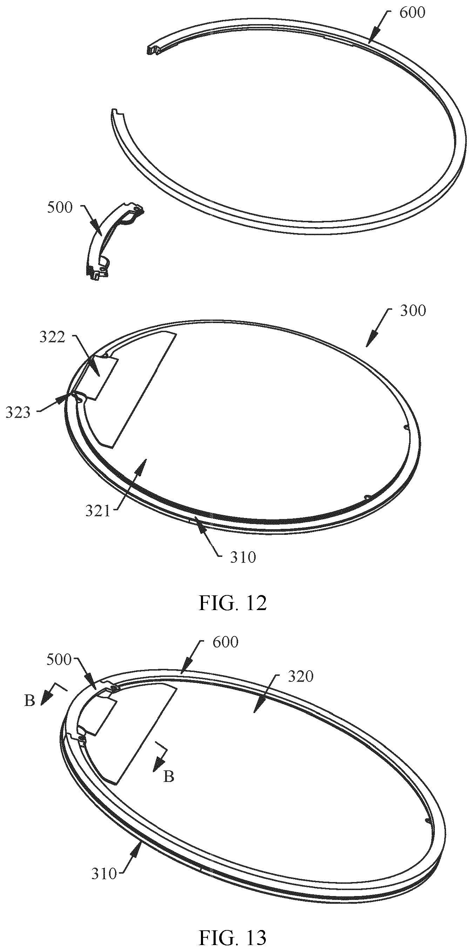

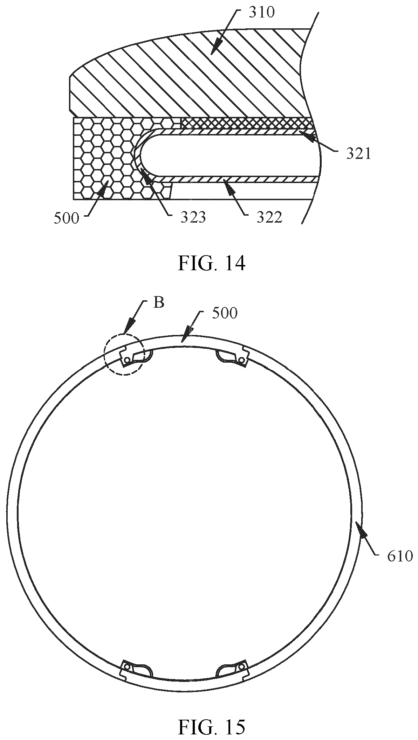

Based on this, an embodiment of this application provides an electronic device 10. The electronic device 10 includes the light-transmitting cover plate 310, the display screen 320, the middle frame 210, and the rear cover 220. Referring to FIG. 12, FIG. 13, and FIG. 14, FIG. 12 is an exploded view of a display module 300, a potting portion 500, and a support 600 according to an embodiment of this application; FIG. 13 is a diagram of a structure of a display module 300, a potting portion 500, and a support 600 according to an embodiment of this application; and FIG. 14 is a partial structural cross-sectional view along B-B in FIG. 13. The electronic device 10 further includes the potting portion 500 and the support 600. The potting portion 500 wraps the bending region 323 of the display screen 320. The support 600 and the potting portion 500 form an annular structure disposed around the display region 321. Both the support 600 and the potting portion 500 are fixedly connected to the first region 311 of the light-transmitting cover plate 310, and a side of each of the support 600 and the potting portion 500 away from the light-transmitting cover plate 310 is fixedly connected to the middle frame 210.

In this way, the bending region 323 whose vertical projection on the light-transmitting cover plate 310 is located in the first region 311 is wrapped by using the potting portion 500, and the support 600 is disposed in the remaining region. The support 600 and the potting portion 500 form an annular structure, that is, equivalent to the glue frame 400. The support 600 and the potting portion 500 form an annular structure disposed around the display screen 320 (that is, the display region 321 of the display screen 320), so that the light-transmitting cover plate 310 and the middle frame 210 are bonded and fixed by using the support 600 and the potting portion 500. Compared with the glue frame 400 in the related technology, the potting portion 500 provided in this embodiment of this application is disposed only in the bending region 323 of the display screen 320, and the support 600 is disposed in the remaining portion. Therefore, relatively large stress is not posed on the display screen 320, thereby avoiding a decrease in the planarity of the display screen 320 and reducing a risk of failure of the display screen 320.

In addition, the annular structure formed by the potting portion 500 and the support 600 can also convert the fixed connection between the middle frame 210 and the light-transmitting cover plate 310 into a fixed connection between the middle frame 210 and both of the potting portion 500 and the support 600, thereby helping reduce the width of the black side frame of the electronic device 10. In addition, because costs of materials used in a potting process are relatively high, materials can be saved by disposing the potting portion 500 for only the bending region 323 of the display screen 320, which is beneficial to reducing costs. Potting time can also be reduced, so as to improve production efficiency.

In some embodiments, the potting portion 500 may use single-component glue, or may use two-component glue. The two-component glue means that two types of glue are mixed at a specific ratio, so as to obtain a better use effect. Using the two-component glue helps reduce the curing time of the potting portion 500, thereby improving production efficiency. For example, the potting portion 500 may use glue such as epoxy, acrylic acid, or polyurethane glue.

In addition, the support 600 may be a metal support 600, or may be a plastic support 600. Using the plastic support 600 is beneficial to reducing overall costs. For example, the support 600 may use a high-molecular polymer material such as a PC (Polycarbonate, polycarbonate) material or a PC/ABS (polycarbonate and acrylonitrile-butadiene-styrene copolymer and blend). In this way, when the plastic support 600 is used, a dielectric constant thereof is smaller than that of the glue frame 400 formed by using the potting material, so that interference to an antenna of the electronic device 10 is less, and loss of antenna performance is less.

When the display screen 320 has a plurality of bending regions 323, a plurality of potting portions 500 may be disposed, and the plurality of potting portions 500 are disposed in a one-to-one correspondence with the plurality of bending regions 323. In this case, the plurality of bending regions 323 are distributed in a circumferential direction of the display region 321 of the display screen 320. Therefore, referring to FIG. 15, FIG. 15 is a diagram of a structure of another support 600 and a potting portion 500 according to an embodiment of this application. The support 600 may include a plurality of sub-supports 610, and the plurality of sub-supports 610 and the plurality of potting portions 500 are alternately disposed to form the annular structure. For example, two bending regions 323 are disposed on the display screen 320, and two potting portions 500 are disposed. In this case, the support 600 may include two sub-supports 610, and the two potting portions 500 are respectively disposed between two end portions of the two sub-supports 610, to form the annular structure.

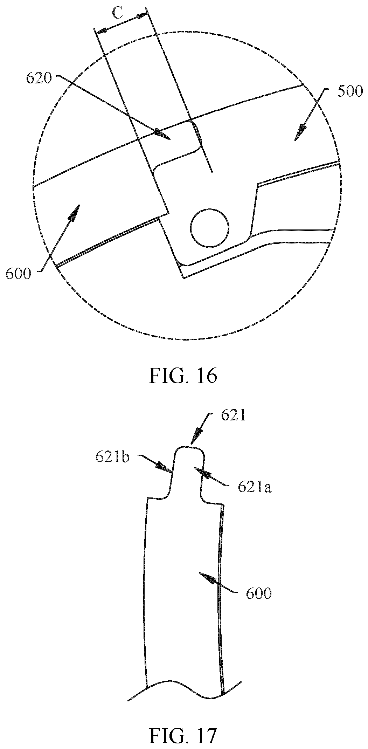

Based on this, to further improve connection strength between the potting portion 500 and the support 600, referring to FIG. 16, FIG. 16 is a structural enlarged view of a region B of FIG. 15. The support 600 provided in this embodiment of this application is provided with a connection portion 620. The connection portion 620 is configured to increase a contact area between the support 600 and the potting portion 500. That is, a bonding area between the support 600 and the potting portion 500 can be increased by using the connection portion 620, thereby helping improve bonding strength between the support 600 and the potting portion 500.

The connection portion 620 may be disposed on an inner wall of the support 600 facing the display screen 320, and disposed at a location close to an end portion of the support 600, to increase an area of an end surface of the support 600, so as to increase the contact area between the support 600 and the potting portion 500. Alternatively, still referring to FIG. 16, the connection portion 620 may be disposed on an end surface of the support 600 facing the potting portion 500, and the end surface of the support 600 covers a vertical projection of the connection portion 620 on the end surface of the support 600. In this way, a width of the support 600 along the direction parallel to the display screen 320 and a thickness thereof along the direction perpendicular to the display screen 320 may not be changed, that is, there is a particular overlapping region C between the support 600 and the potting portion 500 along a distribution direction of the support 600 and the potting portion 500. Therefore, while the width of the black side frame on the display surface of the electronic device 10 is not increased, and the area of the display region 321 is ensured, connection strength between the support 600 and the potting portion 500 can be improved.

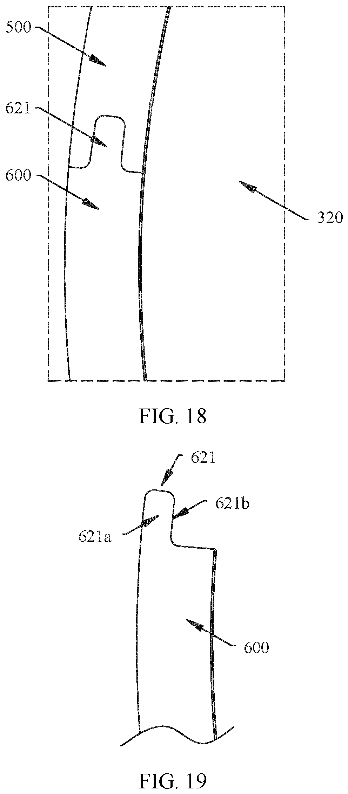

In some embodiments, referring to FIG. 17 and FIG. 18, FIG. 17 is a diagram of a structure of a connection portion 620 according to an embodiment of this application, and FIG. 18 is a diagram of a connection structure between the connection portion 620 according to FIG. 17 and a potting portion 500. The connection portion 620 may include a protrusion 621. The protrusion 621 is disposed on the end surface of the support 600 facing the potting portion 500. The potting portion 500 is bonded and fixed to at least one side wall of the protrusion 621, and is bonded and fixed to a part that is on the end surface of the support 600 and that is not provided with the protrusion 621. In this way, based on that opposite end surfaces of the support 600 and the potting portion 500 are bonded to each other, a bonding surface between a side wall of the protrusion 621 and the potting portion 500 is increased, so as to increase the bonding area between the support 600 and the potting portion 500, thereby helping improve bonding strength between the support 600 and the potting portion 500.

Still referring to FIG. 17 and FIG. 18, the protrusion 621 may be disposed in the middle portion of the end surface of the support 600, that is, along the direction parallel to the display screen 320. The protrusion 621 and the support 600 form a "wedge" structure.

For example, a cross section of the protrusion 621 may be approximately rectangular, and the protrusion 621 has two first surfaces 621a. The two first surfaces 621a are parallel to the display screen 320. Surfaces disposed between the two first surfaces 621a are two second surfaces 621b. The two first surfaces 621a may be respectively flush with two surfaces that are on the support 600 and that are parallel to the display screen 320. In this way, the potting portion 500 is attached to the other two second surfaces 621b on the protrusion 621 and the end surface away from the support 600, and is bonded and fixed to each other.

Alternatively, along the direction perpendicular to the display screen 320, the thickness of the protrusion 621 may be less than that of the support 600, that is, a step structure is formed between at least one first surface 621a of the protrusion 621 and the surface of the support 600. In this case, the potting portion 500 is further attached to the at least one first surface 621a, and is bonded and fixed thereto, thereby helping further increase the bonding area between the support 600 and the potting portion 500. When the two first surfaces 621a are not flush with the surface of the support 600, the protrusion 621 may be completely wrapped by the potting portion 500. That is, the end surface of the potting portion 500 facing the support 600 has a recess structure. The protrusion 621 extends into the recess structure. In this way, the bonding area between the support 600 and the potting portion 500 can be further increased, thereby further improving connection strength between the support 600 and the potting portion 500.

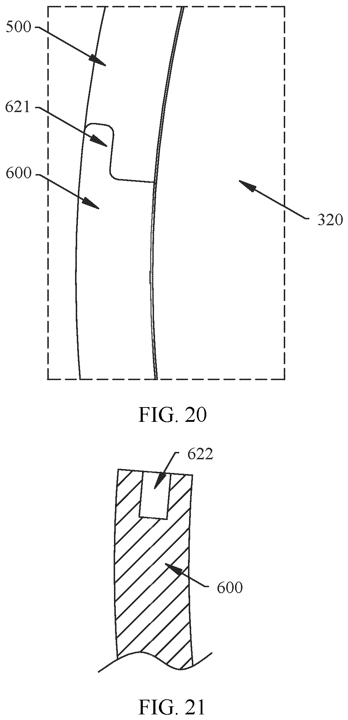

Referring to FIG. 19 and FIG. 20, FIG. 19 is a diagram of a structure of another connection portion 620 according to an embodiment of this application, and FIG. 20 is a diagram of a connection structure between the connection portion 620 according to FIG. 19 and a potting portion 500. The protrusion 621 may alternatively be disposed on a side of the end surface of the support 600 away from the display screen 320 or a side thereof close to the display screen 320. That is, along the direction parallel to the display screen 320, an "L"-shaped structure is formed between the protrusion 621 and the support 600.

For example, a cross section of the protrusion 621 has the foregoing rectangular structure, and the protrusion 621 has two first surfaces 621a parallel to the display screen 320, and a second surface 621b disposed between the two first surfaces 621a. The protrusion 621 may be disposed on the side close to the display screen 320, that is, the second surface 621b of the protrusion 621 facing the display screen 320 is flush with an inner wall of the support 600, and the two first surfaces 621a may be flush with two surfaces of the support 600 that are parallel to the display screen 320. In this way, the potting portion 500 is attached to the second surface 621b of the protrusion 621 away from the display screen 320 and the end surface thereof away from the support 600, and is bonded and fixed to each other.

Alternatively, the protrusion 621 may be disposed on the side away from the display screen 320, that is, the second surface 621b of the protrusion 621 away from the display screen 320 is flush with the outer wall of the support 600, and the two first surfaces 621a may be flush with two surfaces of the support 600 that are parallel to the display screen 320. In this way, the potting portion 500 is attached to the second surface 621b of the protrusion 621 facing the display screen 320 and the end surface facing away from the support 600, and is bonded and fixed to each other.

Alternatively, the thickness of the protrusion 621 perpendicular to the display screen 320 may be less than the thickness of the support 600, that is, a step structure is formed between at least one first surface 621a of the protrusion 621 and the surface of the support 600. In this case, the potting portion 500 is further attached to the at least one first surface 621a, and is bonded and fixed to each other. When both the two first surfaces 621a of the protrusion 621 are not flush with the surface of the support 600, the potting portion 500 is attached to both the two first surfaces 621a. In this way, the bonding area between the support 600 and the potting portion 500 can be further increased, so as to improve bonding strength between the support 600 and the potting portion 500.

In some other examples, a cross sectional shape of the protrusion 621 may alternatively be a circle, a regular polygon (a regular triangle, a regular pentagon, a regular hexagon, or the like), an irregular polygon, or the like. For example, when the protrusion 621 is a circle (that is, the protrusion 621 has a cylindrical structure), the protrusion 621 may be disposed at different locations of the end surface of the support 600, that is, the middle portion of the end surface of the support 600, the side close to the display screen 320, the side away from the display screen 320, or the like. In addition, when the protrusion 621 is disposed at different locations, the potting portion 500 may wrap an end surface of the cylindrical structure and at least a part of a side surface thereof, so as to increase the bonding area between the support 600 and the potting portion 500.

In addition, when the cross section of the protrusion 621 has the foregoing another shape, a specific disposing location and a connection manner thereof are the same as those of the foregoing structure. Therefore, no repeated description is made in this application.

It should be noted that, a surface of the protrusion 621 is flush with the surface of the support 600 means that the surface of the protrusion 621 and the surface of the support 600 form a complete surface, and there is no step structure between the two. For example, when the surface of the protrusion 621 and the surface of the support 600 are both arc surfaces, the two can be smoothly connected to form a complete arc surface.

In addition, the protrusion 621 may be fixedly connected to the support 600 in a manner such as gluing or welding. Alternatively, the protrusion 621 and the support 600 may use an integral structure. For example, the protrusion 621 and the support 600 are integrally formed by using an injection process, thereby helping improve structural strength of the protrusion 621 and the support 600.

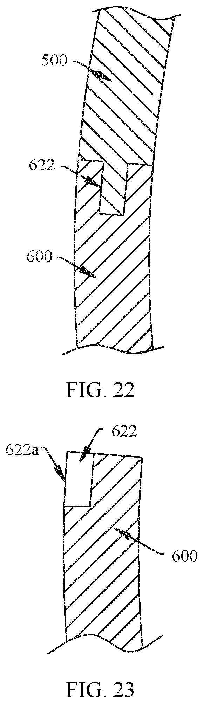

In some other embodiments, referring to FIG. 21 and FIG. 22, FIG. 21 is a cross-sectional diagram of still another connection portion 620 according to an embodiment of this application, and FIG. 22 is a cross-sectional diagram of a connection structure between the connection portion 620 according to FIG. 21 and a potting portion 500. The connection portion 620 may further include a groove 622. The groove 622 is provided on the end surface of the support 600 facing an adjacent potting portion 500. The potting portion 500 is filled in the groove 622, and the potting portion 500 is bonded and fixed to a part that is on the support 600 and that is not provided with the groove 622. In this way, based on that opposite surfaces of the support 600 support 600 and the potting portion 500 are bonded to each other, a bonding surface between the potting portion 500 and the inner wall of the groove 622 is further added, so as to increase the bonding area between the support 600 and the potting portion 500, thereby facilitating improving bonding strength between the support 600 and the potting portion 500.

For example, still referring to FIG. 21 and FIG. 22, the groove 622 may be provided in the middle portion of the end surface of the support 600, and the potting portion 500 is filled in the groove 622, that is, a part of the potting portion 500 disposed in the groove 622 is completely wrapped by the groove 622, so as to increase the bonding area between the support 600 and the potting portion 500, thereby improving connection strength between the support 600 and the potting portion 500.

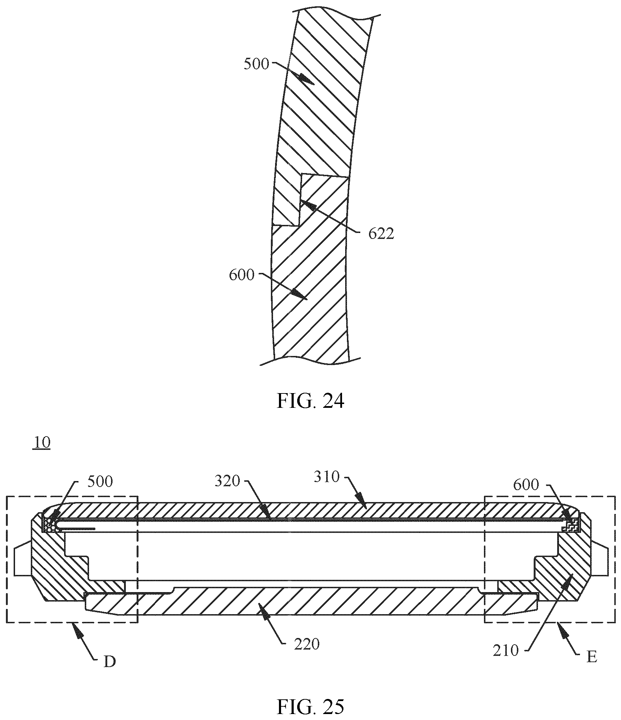

Alternatively, referring to FIG. 23 and FIG. 24, FIG. 23 is a cross-sectional view of yet still another connection portion 620 according to an embodiment of this application, and FIG. 24 is a cross-sectional view of a connection structure between the connection portion 620 according to FIG. 23 and a potting portion 500. The groove 622 may further penetrate any side wall (a side wall other than the end surface) of the support 600, that is, an opening 622a communicating with the groove 622 is formed on the side wall of the support 600. In this case, the potting portion 500 is filled in the groove 622 and extends to the opening 622a, so that the opening 622a on the side wall of the support 600 is filled with the potting portion 500, to avoid forming a recess structure on the side wall of the support 600, thereby facilitating overall aesthetics.

Based on this, the connection portion 620 may further include both the protrusion 621 and the groove 622. That is, the protrusion 621 and the groove 622 are disposed on the end surface of the support 600 facing the potting portion 500. The potting portion 500 may include the protrusion 621 and fill the groove 622, so as to further increase the bonding area between the support 600 and the potting portion 500, thereby further improving bonding strength between the support 600 and the potting portion 500.

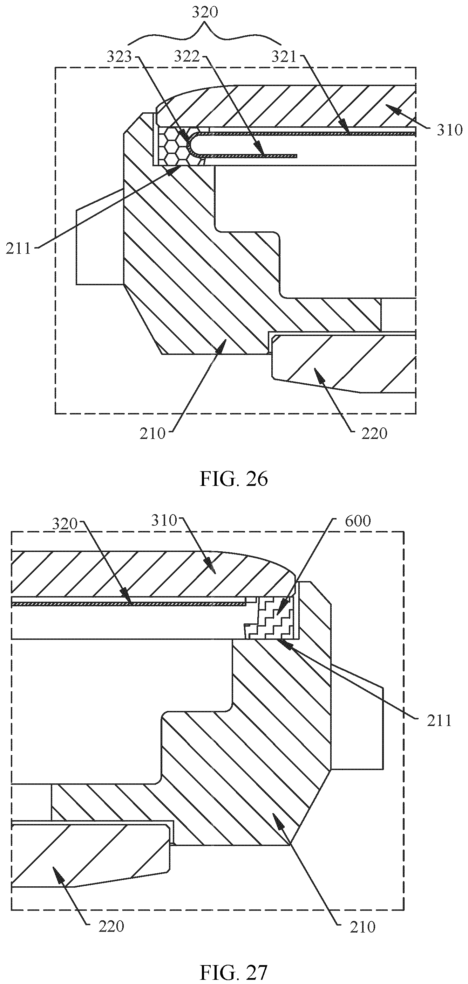

Referring to FIG. 25, FIG. 26, and FIG. 27, FIG. 25 is a cross-sectional view of an electronic device 10 according to an embodiment of this application, FIG. 26 is a structural enlarged view of a region D of FIG. 25, and FIG. 27 is a structural enlarged view of a region E of FIG. 25. The support 600 and a side of the potting portion 500 is used to be bonded and fixed to the light-transmitting cover plate 310, and the surface thereof away from the light-transmitting cover plate 310 is used to be fixedly connected to the middle frame 210. Specifically, a step surface 211 may be formed on an inner wall of the middle frame 210, and both the support 600 and the potting portion 500 are disposed in the middle frame 210 and are fixed to the step surface 211. For example, the support 600 and the potting portion 500 may be fixed to the step surface 211 in the middle frame 210 in a manner such as bonding or screwing.

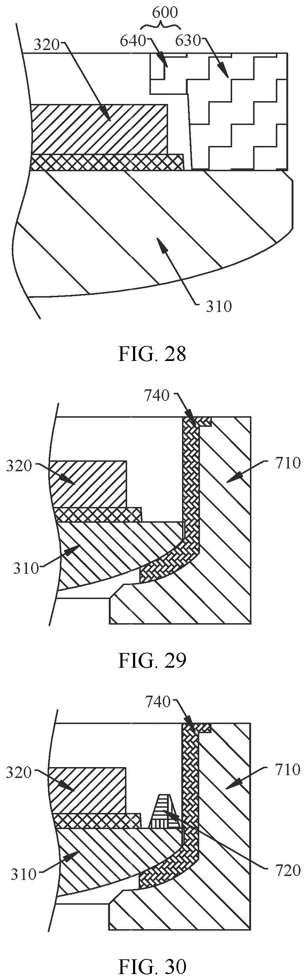

To further improve connection strength between the support 600 and the middle frame 210, referring to FIG. 28, FIG. 28 is a diagram of a partial structure of another support 600 according to an embodiment of this application. The support 600 may include a support body 630 and a boss 640. The connection portion 620 is disposed on an end surface of the support body 630 facing the potting portion 500. The boss 640 is disposed on a surface of the support body 630 facing the display screen 320. A surface of the boss 640 away from the light-transmitting cover plate 310 is flush with a surface of the support body 630 facing away from the light-transmitting cover plate 310. In this way, an area of the surface of the support 600 away from the light-transmitting cover plate 310 can be increased, that is, the bonding area between the support 600 and the middle frame 210 can be increased, thereby helping improve connection strength between the support 600 and the middle frame 210.

In some embodiments, one boss 640 may be disposed, and one protrusion 621 extends from one end of the support body 630 to the other end of the support body 630 along a circumferential direction of the annular structure formed by the support 600 and the potting portion 500. In this way, the area of the surface of the support 600 away from the light-transmitting cover plate 310 can be maximally increased, thereby increasing the bonding area between the support 600 and the middle frame 210. Alternatively, a plurality of bosses 640 may be disposed, and the plurality of bosses 640 may be distributed at intervals along the circumferential direction of the annular structure. In this way, materials for making the bosses 640 can be saved, so that production costs can be reduced while the bonding area between the support 600 and the middle frame 210 is increased.

In addition, referring to FIG. 28, there is a gap between the boss 640 and the display screen 320, that is, the boss 640 and the display screen 320 do not contact each other. A part of the glue frame 400 shown in FIG. 11 as provided in the related technology may be pressed against the surface of the display screen 320 away from the light-transmitting cover plate 310. Therefore, compared with the related technology, the support 600 provided in this embodiment of this application does not press against the display screen 320, and when the electronic device 10 falls, another external force is not imposed on the display screen 320, so that the display screen 320 can be effectively protected, and the display screen 320 is not easily damaged.

Based on this, the following describes in detail a production and installation process of the annular structure formed by the potting portion 500 and the support 600.

First, pre-glue dispensing processing may be performed on the display module 300. The first region 311 of the light-transmitting cover plate 310 shown in FIG. 4 is processed, for example, through wiping by using alcohol or in a plasma manner, so as to improve surface energy of the first region 311.

Next, referring to FIG. 29, FIG. 29 is a diagram of a partial structure of a display module 300 placed in a fixture lower cover 710 according to an embodiment of this application. The display module 300 is placed in the fixture lower cover 710. Interference fit is provided between the light-transmitting cover plate 310 of the display module 300 and a silicone liner 740 in the fixture lower cover 710, so that the display module 300 is clamped and positioned in the fixture lower cover 710. In addition, the display screen 320 is disposed on a side close to an opening of the fixture lower cover 710.

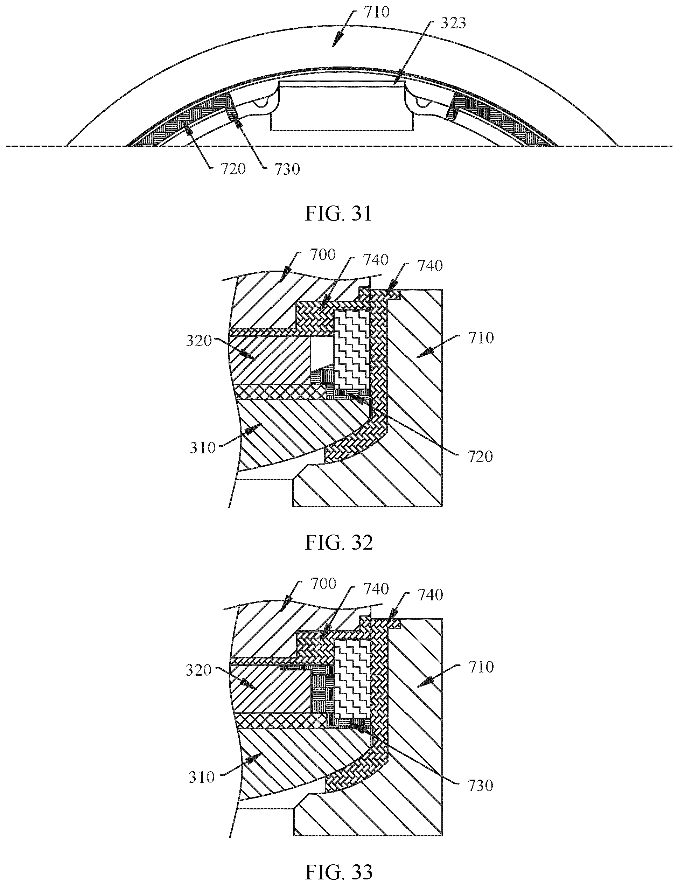

Next, referring to FIG. 30 and FIG. 31, FIG. 30 is a diagram of a partial structure of performing glue dispensing on a light-transmitting cover plate 310 of the display module 300 according to FIG. 29, and FIG. 31 is a front view of a glue dispensing region shown in FIG. 30. A glue dispensing process is performed on the light-transmitting cover plate 310. Specifically, a glue dispensing layer 720 is formed by dispensing glue on a part that is on the first region 311 of the light-transmitting cover plate 310 and that is not provided with the bending region 323 of the display screen 320. In addition, glue is dispensed on two sides of the bending region 323 of the display screen 320, to form a dam region 730. In this way, by using the dam region 730, a part at which the bending region 323 is located can be separated from a region in which glue is dispensed.

Next, referring to FIG. 32 and FIG. 33, FIG. 32 is a diagram of a partial structure of placing a support 600 in a fixture lower cover 710 and covering a fixture upper cover 700 according to FIG. 30; and FIG. 33 is a diagram of a partial structure of a dam region 730 in the fixture lower cover 710 according to FIG. 32. The support 600 is placed in the fixture lower cover 710, and the fixture upper cover 700 is covered. The silicone liner 740 of the fixture upper cover 700 fastens the support 600 in a region other than the bending region 323 of the display screen 320. In addition, the fixture upper cover 700 and the fixture lower cover 710 are pressed fit with glue in the dam region 730. After the glue dispensing layer 720 and the glue in the dam region 730 are cured, a cavity can be formed between the fixture upper cover 700, the fixture lower cover 710, the end portion of the support 600, the glue in the dam region 730, and the display screen 320. In this case, the bending region 323 of the display screen 320 is located in the cavity, and the cavity is used for injecting a potting material.

Next, the fixture (including the fixture upper cover 700 and the fixture lower cover 710) is placed in a potting device. A cabin of the potting device is evacuated. After a vacuum value set in advance is reached, potting is performed on the cavity.

Finally, after potted glue is cured, the potting portion 500 shown in FIG. 15 may be formed, and the potting portion 500 is bonded and fixed to the support 600 to form a complete support structure, that is, the annular structure, and the annular structure is bonded and fixed to the light-transmitting cover plate 310.

In this way, production and installation of the potting portion 500 and the support 600 can be completed. Then, the display module 300 connected to the potting portion 500 and the support 600 is assembled with the middle frame 210 and the rear cover 220, to form the electronic device 10.

In the descriptions of this specification, specific features, structures, materials, or characteristics may be combined in any one or more embodiments or examples in a suitable manner.

The foregoing descriptions are merely specific implementations of this application, but are not intended to limit the protection scope of this application. The protection scope of this application shall be subject to the protection scope of the claims.

## Claims

1. An electronic device (10), comprising:
a light-transmitting cover plate (310), a display screen (320), the display screen (320) being disposed on a side of the light-transmitting cover plate (310), a potting portion (500), and a support (600), **characterized by**
the light-transmitting cover plate (310) having a first region (311) and a second region (312), and the first region (311) being disposed around the second region (312);
the display screen (320) comprising a display region (321) and a bending region (323), the display region (321) being attached to the second region (312), and a vertical projection of the bending region (323) on the light-transmitting cover plate (310) being located in the first region (311);
the potting portion (500) wrapping the bending region (323); and
the support (600) and the potting portion (500) forming an annular structure, the annular structure being disposed around the display region (321), and both the support (600) and the potting portion (500) being fixedly connected to the first region (311).

2. The electronic device (10) according to claim 1, wherein a connection portion (620) is disposed on the support (600), the connection portion (620) is disposed on an end surface of the support (600) facing the potting portion (500), and the end surface of the support (600) covers a vertical projection of the connection portion (620) on the end surface of the support (600).

3. The electronic device (10) according to claim 2, wherein the connection portion (620) comprises a protrusion (621), the protrusion (621) is disposed on the end surface of the support (600) facing the potting portion (500), the potting portion (500) is bonded and fixed to at least one side wall of the protrusion (621), and the potting portion (500) is bonded and fixed to a part (110, 120) that is on the end surface of the support (600) and that is not provided with the protrusion (621).

4. The electronic device (10) according to claim 3, wherein the support (600) and the protrusion (621) are of an integral structure.

5. The electronic device (10) according to any one of claims 2 to 4, wherein the connection portion (620) further comprises a groove (622), the groove (622) is provided on the end surface of the support (600) facing the potting portion (500), the potting portion (500) is filled in the groove (622), and the potting portion (500) is bonded and fixed to a part (110, 120) that is on the end surface of the support (600) and that is not provided with the groove (622).

6. The electronic device (10) according to any one of claims 1 to 5, wherein the support (600) comprises a support body (630) and a boss (640), the boss (640) is disposed on a surface (621a, 621b) of the support body (630) facing the display screen (320), a height of the boss (640) in a direction perpendicular to the light-transmitting cover plate (310) is less than a height of the support body (630) in the direction perpendicular to the light-transmitting cover plate (310), and a surface (621a, 621b) of the boss (640) away from the light-transmitting cover plate (310) is flush with a surface (621a, 621b) of the support body (630) away from the light-transmitting cover plate (310).

7. The electronic device (10) according to claim 6, wherein the boss (640) extends along a circumferential direction of the annular structure, and a length of the boss (640) is equal to a length of the support body (630).

8. The electronic device (10) according to claim 6, wherein a plurality of bosses (640) are disposed, the plurality of bosses (640) are distributed at intervals along a circumferential direction of the annular structure, and a length of the boss (640) is less than a length of the support body (630).

9. The electronic device (10) according to any one of claims 1 to 8, wherein a plurality of potting portions (500) are disposed, the support (600) comprises a plurality of sub-supports (610), and the plurality of sub-supports (610) and the plurality of potting portions (500) are alternately disposed to form the annular structure.

10. The electronic device (10) according to any one of claims 1 to 9, wherein the potting portion (500) uses two-component glue.

11. The electronic device (10) according to any one of claims 1 to 10, wherein the electronic device (10) further comprises:
a middle frame (210), the light-transmitting cover plate (310) being clipped onto a side of the middle frame (210), and all the display screen (320), the potting portion (500), and the support (600) being disposed in the middle frame (210); and a step surface (211) disposed toward the light-transmitting cover plate (310) is formed on an inner wall of the middle frame (210), and the potting portion (500) and the support (600) are fixed on the step surface (211).

## Patentansprüche

1. Elektronische Vorrichtung (10), umfassend:
eine lichtdurchlässige Abdeckplatte (310), einen Anzeigebildschirm (320), wobei der Anzeigebildschirm (320) auf einer Seite der lichtdurchlässigen Abdeckplatte (310) angeordnet ist, einen Vergussabschnitt (500) und einen Träger (600), **dadurch gekennzeichnet, dass**
die lichtdurchlässige Abdeckplatte (310) einen ersten Bereich (311) und einen zweiten Bereich (312) aufweist und der erste Bereich (311) um den zweiten Bereich (312) herum angeordnet ist;
der Anzeigebildschirm (320) einen Anzeigebereich (321) und einen Biegebereich (323) umfasst, wobei der Anzeigebereich (321) an dem zweiten Bereich (312) befestigt ist und eine vertikale Projektion des Biegebereichs (323) auf die lichtdurchlässige Abdeckplatte (310) in dem ersten Bereich (311) liegt;
der Vergussabschnitt (500) den Biegebereich (323) umhüllt; und
der Träger (600) und der Vergussabschnitt (500) eine ringförmige Struktur bilden, wobei die ringförmige Struktur um den Anzeigebereich (321) herum angeordnet ist und sowohl der Träger (600) als auch der Vergussabschnitt (500) fest mit dem ersten Bereich (311) verbunden sind.

2. Elektronische Vorrichtung (10) nach Anspruch 1, wobei ein Verbindungsabschnitt (620) an dem Träger (600) angeordnet ist, wobei der Verbindungsabschnitt (620) auf einer dem Vergussabschnitt (500) zugewandten Endfläche des Trägers (600) angeordnet ist und die Endfläche des Trägers (600) eine vertikale Projektion des Verbindungsabschnitts (620) auf der Endfläche des Trägers (600) abdeckt.

3. Elektronische Vorrichtung (10) nach Anspruch 2, wobei der Verbindungsabschnitt (620) einen Vorsprung (621) umfasst, wobei der Vorsprung (621) auf der dem Vergussabschnitt (500) zugewandten Endfläche des Trägers (600) angeordnet ist, wobei der Vergussabschnitt (500) an mindestens eine Seitenwand des Vorsprungs (621) geklebt und befestigt ist, und wobei der Vergussabschnitt (500) an einen Teil (110, 120) geklebt und befestigt ist, der sich auf der Endfläche des Trägers (600) befindet und nicht mit dem Vorsprung (621) versehen ist.

4. Elektronische Vorrichtung (10) nach Anspruch 3, wobei der Träger (600) und der Vorsprung (621) als einstückige Struktur ausgebildet sind.

5. Elektronische Vorrichtung (10) nach einem der Ansprüche 2 bis 4, wobei der Verbindungsabschnitt (620) ferner eine Nut (622) umfasst, wobei die Nut (622) auf der dem Vergussabschnitt (500) zugewandten Endfläche des Trägers (600) vorgesehen ist, wobei der Vergussabschnitt (500) in die Nut (622) gefüllt ist und der Vergussabschnitt (500) an einen Teil (110, 120) geklebt und befestigt ist, der sich auf der Endfläche des Trägers (600) befindet und nicht mit der Nut (622) versehen ist.

6. Elektronische Vorrichtung (10) nach einem der Ansprüche 1 bis 5, wobei die Stütze (600) einen Stützkörper (630) und einen Vorsprung (640) umfasst, wobei der Vorsprung (640) auf einer dem Anzeigebildschirm (320) zugewandten Oberfläche (621a, 621b) des Stützkörpers (630) angeordnet ist, eine Höhe des Vorsprungs (640) in einer Richtung senkrecht zu der lichtdurchlässigen Abdeckplatte (310) geringer ist als eine Höhe des Stützkörpers (630) in der Richtung senkrecht zu der lichtdurchlässigen Abdeckplatte (310), und eine Oberfläche (621a, 621b) des Vorsprungs (640), die von der lichtdurchlässigen Abdeckplatte (310) abgewandt ist, bündig mit einer Oberfläche (621a, 621b) des Stützkörpers (630) ist, die von der lichtdurchlässigen Abdeckplatte (310) abgewandt ist.

7. Elektronische Vorrichtung (10) nach Anspruch 6, wobei sich der Vorsprung (640) entlang einer Umfangsrichtung der ringförmigen Struktur erstreckt und eine Länge des Vorsprungs (640) gleich einer Länge des Stützkörpers (630) ist.

8. Elektronische Vorrichtung (10) nach Anspruch 6, wobei eine Vielzahl von Vorsprüngen (640) angeordnet ist, wobei die Vielzahl von Vorsprüngen (640) in Abständen entlang einer Umfangsrichtung der ringförmigen Struktur verteilt ist und eine Länge des Vorsprungs (640) geringer ist als eine Länge des Stützkörpers (630).

9. Elektronische Vorrichtung (10) nach einem der Ansprüche 1 bis 8, wobei eine Vielzahl von Vergussabschnitten (500) angeordnet ist, die Stütze (600) eine Vielzahl von Teilstützen (610) umfasst und die Vielzahl von Teilstützen (610) und die Vielzahl von Vergussabschnitten (500) abwechselnd angeordnet sind, um die ringförmige Struktur zu bilden.

10. Elektronische Vorrichtung (10) nach einem der Ansprüche 1 bis 9, wobei der Vergussabschnitt (500) Zweikomponentenkleber verwendet.

11. Elektronische Vorrichtung (10) nach einem der Ansprüche 1 bis 10, wobei die elektronische Vorrichtung (10) ferner umfasst:
einen mittleren Rahmen (210), wobei die lichtdurchlässige Abdeckplatte (310) an einer Seite des mittleren Rahmens (210) festgeklemmt ist und der Anzeigebildschirm (320), der Vergussabschnitt (500) und die Stütze (600) alle in dem mittleren Rahmen (210) angeordnet sind; und wobei eine zur lichtdurchlässigen Abdeckplatte (310) hin ausgerichtete Stufenfläche (211) an einer Innenwand des mittleren Rahmens (210) ausgebildet ist und der Vergussabschnitt (500) sowie die Stütze (600) an der Stufenfläche (211) befestigt sind.

## Revendications

1. Dispositif électronique (10), comprenant :
une plaque de couverture transmettant la lumière (310), un écran d'affichage (320), l'écran d'affichage (320) étant disposé sur un côté de la plaque de couverture transmettant la lumière (310), une partie d'enrobage (500) et un support (600), **caractérisé en ce que**
la plaque de couverture transmettant la lumière (310) ayant une première région (311) et une seconde région (312), et la première région (311) étant disposée autour de la seconde région (312) ;
l'écran d'affichage (320) comprenant une région d'affichage (321) et une région de courbure (323), la région d'affichage (321) étant fixée à la seconde région (312), et une projection verticale de la région de courbure (323) sur la plaque de couverture transmettant la lumière (310) étant située dans la première région (311) ;
la partie d'enrobage (500) enveloppant la région de courbure (323) ; et
le support (600) et la partie d'enrobage (500) formant une structure annulaire, la structure annulaire étant disposée autour de la région d'affichage (321), et à la fois le support (600) et la partie d'enrobage (500) étant connectés de manière fixe à la première région (311).

2. Dispositif électronique (10) selon la revendication 1, dans lequel une partie de connexion (620) est disposée sur le support (600), la partie de connexion (620) est disposée sur une surface d'extrémité du support (600) faisant face à la partie d'enrobage (500), et la surface d'extrémité du support (600) couvre une projection verticale de la partie de connexion (620) sur la surface d'extrémité du support (600).

3. Dispositif électronique (10) selon la revendication 2, dans lequel la partie de connexion (620) comprend une saillie (621), la saillie (621) est disposée sur la surface d'extrémité du support (600) faisant face à la partie d'enrobage (500), la partie d'enrobage (500) est collée et fixée à au moins une paroi latérale de la saillie (621), et la partie d'enrobage (500) est collée et fixée à une partie (110, 120) qui est sur la surface d'extrémité du support (600) et qui n'est pas pourvue de la saillie (621).

4. Dispositif électronique (10) selon la revendication 3, dans lequel le support (600) et la saillie (621) sont d'une structure monobloc.

5. Dispositif électronique (10) selon l'une quelconque des revendications 2 à 4, dans lequel la partie de connexion (620) comprend en outre une rainure (622), la rainure (622) est prévue sur la surface d'extrémité du support (600) faisant face à la partie d'enrobage (500), la partie d'enrobage (500) est remplie dans la rainure (622), et la partie d'enrobage (500) est collée et fixée à une partie (110, 120) qui est sur la surface d'extrémité du support (600) et qui n'est pas pourvue de la rainure (622).

6. Dispositif électronique (10) selon l'une quelconque des revendications 1 à 5, dans lequel le support (600) comprend un corps de support (630) et un bossage (640), le bossage (640) est disposé sur une surface (621a, 621b) du corps de support (630) faisant face à l'écran d'affichage (320), une hauteur du bossage (640) dans une direction perpendiculaire à la plaque de recouvrement translucide (310) est inférieure à une hauteur du corps de support (630) dans la direction perpendiculaire à la plaque de recouvrement translucide (310), et une surface (621a, 621b) du bossage (640) éloignée de la plaque de recouvrement translucide (310) est affleurante à une surface (621a, 621b) du corps de support (630) éloignée de la plaque de recouvrement translucide (310).

7. Dispositif électronique (10) selon la revendication 6, dans lequel le bossage (640) s'étend le long d'une direction circonférentielle de la structure annulaire, et une longueur du bossage (640) est égale à une longueur du corps de support (630).

8. Dispositif électronique (10) selon la revendication 6, dans lequel une pluralité de bossages (640) sont disposés, la pluralité de bossages (640) sont répartis à intervalles le long d'une direction circonférentielle de la structure annulaire, et une longueur du bossage (640) est inférieure à une longueur du corps de support (630).

9. Dispositif électronique (10) selon l'une quelconque des revendications 1 à 8, dans lequel une pluralité de portions d'enrobage (500) sont disposées, le support (600) comprend une pluralité de sous-supports (610), et la pluralité de sous-supports (610) et la pluralité de portions d'enrobage (500) sont disposées en alternance pour former la structure annulaire.

10. Dispositif électronique (10) selon l'une quelconque des revendications 1 à 9, dans lequel la portion d'enrobage (500) utilise de la colle à deux composants.

11. Dispositif électronique (10) selon l'une quelconque des revendications 1 à 10, dans lequel le dispositif électronique (10) comprend en outre :
un cadre intermédiaire (210), la plaque de recouvrement translucide (310) étant clipsée sur un côté du cadre intermédiaire (210), et l'ensemble de l'écran d'affichage (320), de la portion d'enrobage (500) et du support (600) étant disposé dans le cadre intermédiaire (210) ; et une surface étagée (211) disposée vers la plaque de recouvrement translucide (310) est formée sur une paroi intérieure du cadre intermédiaire (210), et la portion d'enrobage (500) et le support (600) sont fixés sur la surface étagée (211).
